# EUROPEAN PATENT SPECIFICATION

(11) **EP 0 328 021 B1**
(45) Date of publication and mention of the grant of the patent: **22.12.1993**
(21) Application number: 89102013.3
(22) Date of filing: 06.02.1989
(51) Int. Cl.: B65H 18/28

(54) **Rolled tab for a roll of plastic film and method and apparatus for producing same**
Aufgewickeltes Ende einer Kunststoffrolle und Verfahren und Vorrichtung zu dessen Herstellung
Extrémité enroulée d'un rouleau de bande en matière plastique et procédé et dispositif pour sa réalisation

(30) Priority: 08.02.1988 US 153115
(43) Date of publication of application: 16.08.1989
(73) Proprietor: THE DOW CHEMICAL COMPANY, Midland Michigan 48640-1967 (US)
(72) Inventor: Smith, Terry B., Midland Mich. 48640 (US)
(74) Representative: Sternagel, Hans-Günther, Dr.

(56) References cited:
- FR-A- 2 192 491
- US-A- 3 945 495
- US-A- 4 029 264
- US-A- 4 243 366

## Description

The present invention relates to a synthetic resinous material film wound on a core and, more particularly, to an apparatus and a method for forming a rolled tab in the tail end portion of the film and a roll of film having a rolled tab.

Commercial films for consumer use are customarily manufactured by winding a polymeric film on a tubular core and then packaging the roll in a dispensing container for retail sale (e.g. US-A-4 243 366). The film has a tail end portion extending around the surface of the roll and terminating at a tail edge. The film is customarily manufactured with a clinging or adhesive surface to enhance its function as a wrapping material. Because of the clinging characteristic of the film, the tail end portion sticks to the surface of the roll making it difficult to identify and grasp the tail end portion in order to separate the tail end portion from the surface of the roll without tearing it. The need for finding the tail end portion of the film and starting to unwind it from the roll without tearing the film has been long recognized, particularly with polymeric films having considerable cling. Hence, roll-starting features have been used in the past to facilitate peeling the tail end portion of the film away from the surface of the roll.

One technique employed prior to the present invention involved applying a coating material to the tail end portion of the film to prevent sticking, such as, for example, starch dust or wax (e.g. US-A-3 945 495). Such coatings, however, are difficult to apply to the film at normal conveyor speeds and do not survive extreme warehouse storage temperatures. Solvents have also been applied to the tail end portion of the film to induce curling in the tail end portion. The solvents, however, are volatile and difficult to use in the production line. The most common technique involves the use of a heating apparatus located in the production line to emboss a pattern in the tail end portion of the film to distinguish it from the rest of the film and reduce sticking of that portion to the surface of the roll. Embossing the film at high conveyor speeds, however, is difficult because the film is relatively fragile and susceptible to tearing upon repeated contact with the embossing plate. Furthermore, the embossed portion of the film must be precisely synchronized with the cutting apparatus that forms the tail end portion in the embossed portion of the film. Maintaining adequately precise temperature control is also difficult because the film will tear if the plate is too hot and will not be sufficiently embossed if the plate is too cold.

Accordingly, there is a need for a roll-starting feature, and, more specifically, one that is capable of being formed in the production line without the application of a coating material or heat and without the need for complex electronic synchronization.

The present invention meets these needs by providing an apparatus adapted for use on a conveyor line to form a rolled tab in the tail end portion of a polymeric film wound into a roll. The tail end portion initially extends circumferentially around the surface of the film roll to which the tail end portion adheres and terminates at a tail edge. The apparatus comprises a bucket which is connected to the conveyor line for movement thereon and has a floor and wall extending therefrom. The floor of the bucket has a tractional surface supporting the roll and the wall has a substantially frictionless surface pushing the roll in the direction of the conveyor line. The apparatus further comprises drive means, extending in a stationary position substantially parallel to the conveyor line and having a resilient tractional surface being compressed into rotational contact with the roll, for rotating the roll. The drive means rotates the roll to rub the surface of the roll against the tractional surface of the floor in the same direction that the tail end portion initially extends along the surface of roll. As a result, the tractional surface of the floor separates the tail end portion from the surface of the roll and rolls the tail edge back on the tail end portion upon successive revolutions of the roll to form a rolled tab containing the tail edge.

In an alternative embodiment, the apparatus comprises means, extending in a stationary position substantially parallel to the conveyor line, for blowing air tangentially along the circumferential surface of the roll and against the tail end portion on successive revolutions to assist in separating and rolling the tail end portion of the film.

The present invention further meets these needs by providing a method for forming a rolled tab in the tail end portion of a roll of film wound on a core. The tail end portion initially extending circumferentially around the surface of the roll to which the tail end portion adheres and terminating at a tail edge, the method comprising the steps of:
propelling the roll along a resilient tractional surface to rotate the roll in the same direction that the tail end portion initially extends along the surface of the roll;
pressing the roll between the resilient tractional surface and a diametrically opposed resilient contact surface with a force of sufficient magnitude to compress the resilient contact surface to form an arc of contact of sufficient length with the roll to maintain traction therebetween; and,
rubbing the rotating surface of the roll at the contact surface while maintaining the traction between the roll and the resilient tractional surface to separate the tail end portion from the surface of the roll and roll the tail edge back on the tail end portion upon successive revolutions of the roll to form a rolled tab containing the tail edge.

The product of the invention is a roll of film wound on a core, comprising:
a core; and
film of a polymeric material having cling wound on said core, said film having a tail end portion on the outer surface of said roll, said tail end portion terminating at a tail edge, said tail edge being rolled back on said tail end portion to form a rolled tab containing said tail edge;
whereby, said rolled tab facilitates identifying and grasping said tail edge to initiate unwinding of the film from the roll.

Accordingly, it is an object of the present invention to provide a roll-starting feature to make it easier to peel the tail end portion of the film away from the surface of the film roll; to provide a roll-starting feature without applying a coating material or heat to the tail end portion of the film; and to provide a roll-starting feature without using complex electronic synchronization equipment. Other objects and advantages of the invention will be apparent from the following description, the accompanying drawings, and the appended claims.
Fig. 1 is a perspective view of a roll of film and a rolled tab formed in the tail end portion of the film in accordance with the present invention;
Fig. 2 is a cross sectional end view of the roll of film of Fig. 1;
Fig. 3 is a schematic plan view of an apparatus for forming the rolled tab on the roll of film in accordance with the present invention;
Fig. 4 is a cross sectional end view of the drive bar assembly and air manifold of the apparatus of Fig. 3 taken along reference line 4-4;
Fig. 5 is a cross sectional end view of the roll located in a bucket of the apparatus of Fig. 3 taken along reference line 5-5;
Fig. 6 is a side view of a drive bar assembly of the apparatus of Fig. 3 taken along reference line 6-6; and
Fig. 7 is a cross sectional side view of an air manifold of the apparatus of Fig. 3 taken along reference line 7-7.

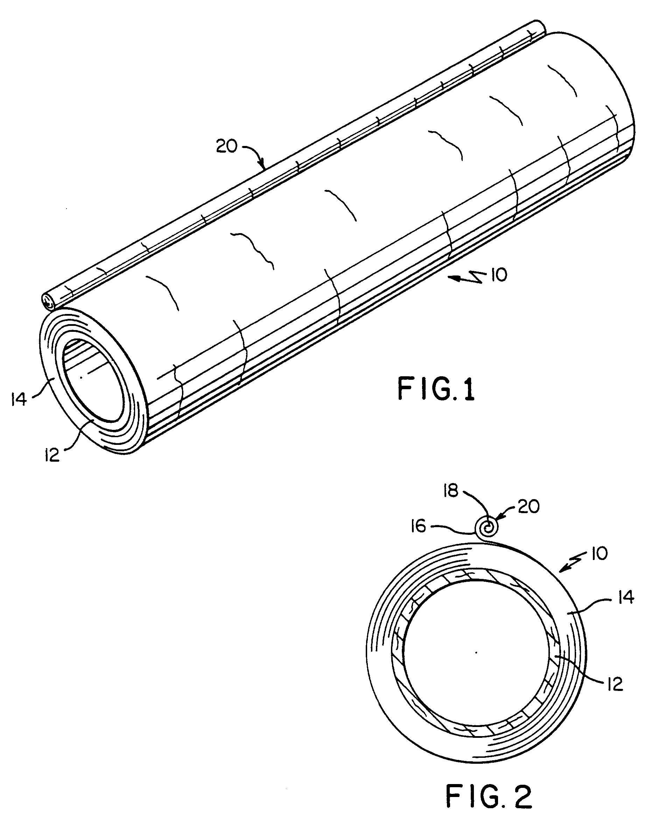

With particular reference to Figs. 1 and 2, a roll of film of a polymeric material is indicated generally at 10 and comprises a core 12 and layers of the film 14 wound thereon. The film 14 has a tail end portion 16 terminating at a tail edge 18. Initially, the tail end portion 16 of the film 14 extends circumferentially around the roll 10 and adheres to the surface of the roll 10. The apparatus of the present invention, however, rolls the tail edge 18 back on the tail end portion 16 to form a rolled tab indicated generally at 20 which contains the tail edge 18. The rolled tab 20 is the roll-starting feature that facilitates identifying and grasping the tail edge 18.

The invention is broadly applicable to known synthetic resinous films or sheets used as a wrapping material in which the film or sheet exhibits a high degree of cling, whether from inherent characteristics, added cling inducing agents, or static charge. The film 14 can be made of, for example, a polymeric material such as vinylidene chloride copolymers (Saran® Wrap films [Trademark of The Dow Chemical Company]), polyvinyl chloride, polyethylene homopolymers and copolymers, and the like. These, films typically exhibit cling characteristics and the present invention utilizes this cling characteristic to form the rolled tab 20. When the tail end portion 16 is rolled back on itself in a direction opposite the direction that the film 14 is wrapped on the roll 10, the partially rolled tab 20 holds together during successive revolutions of the roll 10 because of the cling characteristic. Thus, a roll-starting tab is formed without applying a coating material to the film 14 or heating the film 14 and without complex electronic synchronizing equipment. The tail edge 18 is typically rolled back about three revolutions, but one full revolution is sufficient. The rolled tab 20 typically is formed from a 25 to 30 mm wide portion of the tail end portion 16 of the film 14 and has a diameter which is typically about 1.5 mm. Because of the clinging characteristic, the rolled tab 20 maintains this shape and does not collapse from vibration when rolls 10 are transported to consumer markets.

The rolls 10 described herein are packaged within standard, consumer-type dispensing cartons, such as for example, trunk-lid style cartons and conventional flap lid style cartons.

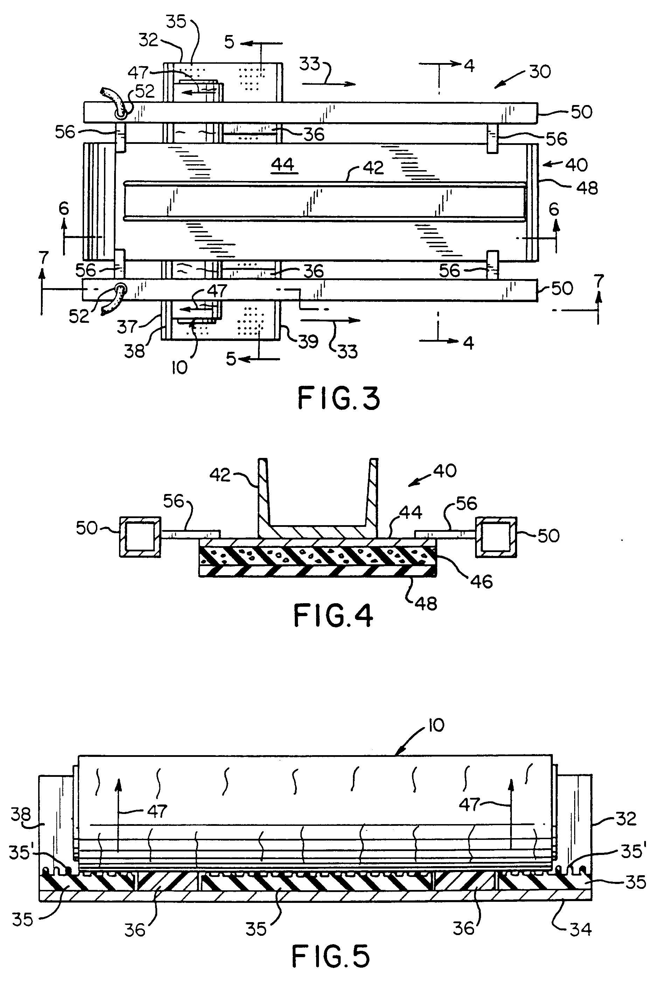

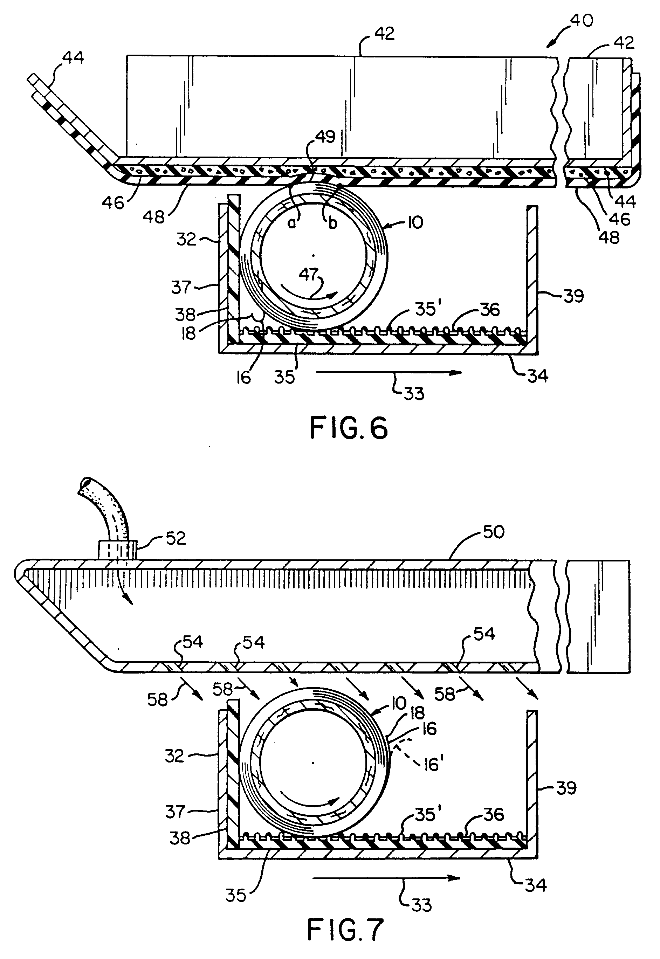

The process of the present invention can be carried out by the apparatus schematically illustrated in Fig. 3 and indicated generally at 30. Referring also to Figs. 5 and 6, the apparatus 30 comprises a bucket 32 connected to a conveyor line (not shown) for transporting the roll 10 therein in a direction indicated by arrows 33. The bucket 32 has a floor 34, an upstream wall 37 extending substantially perpendicular from the upstream end of the floor 34 and a downstream wall 39 extending substantially perpendicular from the downstream end of the floor 34. The inside surface of the upstream wall 37 is covered with a polymeric material such as, for example, polytetrafluoroethylene to form a panel 38 which is secured to the wall 37 by screws, glue or other suitable securing material. The inside surface of the panel 38 has a substantially frictionless surface for pushing the roll 10 in the direction 33 of the conveyor line. The floor 34 of the bucket 32 is covered with a resilient pad 35 made of a rubber, or the like, having a knobby or treaded traction surface 35′ and two pads 36 aligned parallel to each other in the direction 33 of the conveyor movement. The pads 36 extend from the panel 38 to the downstream wall 39 and are equidistant from the center line of the bucket 32 to provide a substantially frictionless support surface for the roll 10. The tips of the treaded surface 35′ extends slightly above the surface of the pads 36 by a distance of about 0.1 mm to provide the traction surface 35′ for rubbing the surface of the roll 10 while the roll 10 rotates freely on the surface of the pads 36 against the inside surface of the panel 38.

The apparatus 30 further comprises drive means, extending in a stationary position substantially parallel to the conveyor line and having a resilient traction surface which is compressed into rotational contact with the roll 10, for rotating the roll 10 to rub the outer surface of the roll 10 against the traction surface 35′ of the pad 35 in the same direction that the tail end portion 16 initially extends along the surface of the roll 10. Referring more specifically to Figs. 3, 4, and 6, the drive means can be a drive bar assembly 40 comprising a drive bar 42, a plate 44, preferably a metal plate, extending at least the full length of the drive bar 42 and having one face secured thereto, a strip of a resilient material 46, preferably a polymeric foam material, covering the other face of the metal plate 44 and cemented thereto, and a resilient material belt 48, preferably made of a rubber, covering the strip 46. The drive bar 42 can be, for example, an aluminum channel bar having a length approximately equal to 3 to 4 times the circumference of the roll 10 of film 14. The drive bar 42 extends in a stationary position substantially parallel to the conveyor line and longitudinally strengthens the plate 44 which presses the belt 48 against the roll 10 to provide a resilient tractional surface. The belt 48 can be, for example, a rubber material having a knobby or treaded surface similar to that of the pad 35. When the plate 44 presses the belt 48 against the roll 10, the resilient material strip 46 is compressed therebetween so that the belt 48 forms an arc of rotational contact 49 with the roll 10 extending from point (a) to point (b).

In operation, the bucket 32 transports the roll 10 under the stationary drive bar assembly 40 to bring the roll into contact with the rubber belt 48 which rotates the roll 10 in a direction indicated by the arrow 47. The roll 10 rotates on the surface of the pad 36 and against the panel 38. The outer surface of the roll 10 also rubs against the treaded surface 35′ of the pad 35 in the same direction that the tail end portion 16 initially extends along the surface of the roll 10. As a result, the tractional, treaded surface 35′ separates the tail end portion 16 from the surface of the roll 10 and rolls the tail edge 18 back after one revolution as shown in Fig. 6. The tractional surface 35′ continues to roll back the tail end portion 16 on itself upon successive revolutions to form the rolled tab 20. Although the partially rolled tab 20 is flattened each time it is rolled against the belt 48 and the panel 38, the film 14 is sufficiently resilient so that the rolled tab 20 returns to its spiral configuration even after being flattened. The drive bar assembly 40 provides enough pressure to the roll 10 so that the arc of rotational contact 49 is of sufficient length to provide enough traction to overcome the rubbing force of the traction surface 35′ without substantial slippage. It has been found that the requisite pressure depends upon the width of the plate 44, the resilient strip 46, and the belt 48, which should be approximately 1/2 of the axial length of the roll 10 so that enough pressure can be applied without deforming the roll 10.

The tips of the treaded surface 35′ are intended to grab the tail edge 18 of the plastic film 14 as the roll 10 is rotated inside the bucket 32.

In another embodiment, the apparatus 30 comprises a means for blowing air tangentially along the circumferential surface of the roll 10 and against the tail end portion 16 on successive revolutions to assist in separating and rolling the tail end portion 16 of the plastic film 14. Such means for blowing can be an air manifold 50 as shown in Figs. 3, 4 and 7. The air manifold 50 can be, for example, a square tube sealed at both ends and having an inlet 52 for receiving compressed air and a plurality of outlets 54 axially aligned along the wall of the tube to blow air onto the circumferential surface of the roll 10 while it rotates along the rubber belt 48 in the direction indicated by the arrows 47. In the preferred embodiment, two air manifolds 50 are used and are supported over each end of the roll 10 by brackets 56 secured to the plate 44 so that they extend substantially parallel to the conveyor line. The outlets 54 are angled, at approximately 30° from the surface of the manifold 50, to direct jets of air 58 generally downstream in the direction of movement of the conveyor line against the tail end portion 16 of the plastic film 14. As the roll 10 rotates along the rubber belt 48, the jets of air 58 hit the tail edge 18 of the tail end portion 16 to separate the tail end portion 16 from the surface of the roll 10 as indicated at 16′. The air jets 58 assist in rolling the tail end portion 16 upon successive revolutions of the roll 10 to form the rolled tab 20.

The method of the invention thus includes the steps of propelling the roll along a resilient tractional surface to rotate the roll in the same direction that the tail end portion initially extends along the surface of the roll, pressing the roll between the resilient tractional surface and a diametrically opposed moving contact position with a force of sufficient magnitude to compress the resilient tractional surface to form an arc of contact of sufficient length with the roll to maintain traction therebetween, and rubbing the rotating surface of the roll at the moving contact position while maintaining traction between the roll and the resilient tractional surface to separate the tail end portion from the surface of the roll and roll the tail edge back on the tail end portion upon successive revolutions of the roll to form the rolled tab containing the tail edge. The method may optionally comprise the step of blowing air tangentially and circumferentially along the rotating surface of the roll and against the tail end portion of the film on successive revolutions to assist in separating and rolling the tail end portion of the film.

Having described the invention in detail and by reference to preferred embodiments thereof, it will be apparent that other modifications and variations are possible without departing from the scope of the invention defined in the appended claims.

### List of reference numbers

- 10: roll of polymeric material
- 12: core
- 14: layers of film
- 16: tail and portion
- 18: tail edge
- 20: rolled tab
- 30: apparatus
- 32: bucket
- 33: arrows
- 34: floor
- 35: resilent pad
- 35′: traction surface
- 36: pads
- 37: upstream wall
- 38: panel
- 39: downstream wall
- 40: bar assembly
- 42: drive bar
- 44: plate
- 46: resident material, strip
- 47: arrow
- 48: belt
- 49: rotaional contact
- 50: air manifold
- 52: inlet
- 54: outlets
- 56: brackets
- 58: air jets

## Claims

1. An apparatus for use on a conveyor line to treat the tail end portion (16) of a roll (10) of film wound on a core (12), the tail end portion (16) terminating at a tail edge (18)
**characterized in that**
said apparatus comprising:
a bucket (32) connected to the conveyor line for movement thereon and having a floor (34) and a wall (38) extending therefrom, said floor (34) having a tractional surface (35') supporting the roll and said wall having a substantially frictionless surface pushing the roll (10) in the direction of the conveyor line; and,
drive means (42) extending in a stationary position substantially parallel to the conveyor line and having a resilient tractional surface (48) being compressed into rotational contact with the roll (10) for rotating the roll (10) to rub the surface of the roll (10) against said tractional surface (35') of said floor (34) in the same direction as the tail end portion (16) initially extends along the surface of the roll (10);
whereby said tractional surface (35') of said floor (34) separates the tail end portion (16) initially extending circumferentially around the surface of the roll (10) to which the tail end portion (16) adheres from the surface of the roll (10) and rolls the tail edge (18) back on the tail end portion (16) upon successive revolutions of the roll (10) to form a rolled tab containing the tail edge (18).

2. The apparatus of Claim 1, wherein said drive means comprises a drive bar (42) having an elongated surface, a resilient material (46) pad covering said surface, and a resilient belt covering said pad and being compressible therebetween so that said belt forms an arc of rotational contact (49) of sufficient length with the roll (10) to maintain traction therebetween while the tractional surface (35') of said floor rubs the surface of the roll (10).

3. The apparatus of Claim 2, wherein said arc of rotational contact (49) extends centrally along about one-half of the axial length of the roll (10).

4. The apparatus of Claim 1, 2, or 3, wherein said tractional surface (35') of said floor comprises at least two substantially frictionless pads (36) on which the roll (10) rotates and a friction pad (35) extending therebetween and along the axial length of the roll (10), said friction pad (35) extending above the surface of said two frictionless pads (36) to rub the axial surface of the roll (10).

5. The apparatus of Claim 1, including means extending in a stationary position substantially parallel to the conveyor line, for blowing air tangentially along the circumferential surface of the roll (10) and against the tail end portion (16) on successive revolutions to assist in separating and rolling the tail end portion (16) of the plastic film.

6. The apparatus of Claim 5, wherein said means for blowing comprises a tube closed at opposite ends, said tube having an inlet (52) for receiving compressed air and a plurality of outlets (54) axially aligned along the wall of said tube for directing streams of air on the circumferential surface of the roll (10) while rotating the roll along said resilient tractional surface (35').

7. The apparatus of Claim 6, wherein said drive means extends centrally along about one-half of the axial surface of the roll (10) and wherein said air blowing means is positioned at opposite axial ends of the roll (10).

8. A method for forming a rolled tab (20) in the tail end portion (16) of a roll (10) of film wound on an core (12), the tail end portion (16) initially extending circumferentially around the surface of the roll (10) to which the tail end protion (16) adheres and terminating at a tail edge (18) by separating the tail end portion (16) from the surface of the roll (10) and forming a rolled tab (20) containing the tail edge (18)
**characterized by**
propelling the roll (10) along a resilient tractional surface (35') to rotate the roll (10) in the same direction that the tail end portion (16) initially extends along the surface of the roll (10);
pressing the roll (10) between the resilient tractional surface (35') and a diametrically opposed resilient contact surface (48) with a force of sufficient magnitude to compress the resilient contact surface (48) to form an arc of contact (49) of sufficient length with the roll (10) to maintain traction therebetween; and,
rubbing the rotating surface of the roll (10) at the contact surface (48) while maintaining the traction between the roll (10) and the resilient trational surface (35') to separate the tail end portion (16) from the surface of the roll (10) and roll the tail edge (18) back on the tail end portion (16) upon successive revolutions of the roll (10) to form said tab (20).

9. The method of Claim 8, wherein the roll (10) is propelled by pushing the rotating surface of the roll (10) radially inwardly with a substantially frictionless surface and parallel to the resilient tractional surface.

10. The method of Claim 8, wherein the rotating surface is pressed at two axial positions along the axial length of the roll (10) and rubbed along the remaining portion of the axial length.

11. The method of Claim 8, wherein the rotating surface of the roll (10) is rubbed along the full axial length of the roll (10).

12. The method of Claim 11, wherein the arc of contact (49) extends centrally along about one-half of the axial length of the roll (10).

13. The method of Claim 8, including the step of blowing air tangentially and circumferentially along the rotating surface of the roll (10) and against the tail end portion of the film on successive revolutions to assist in separating and rolling the tail end portion of the film.

14. The method of Claim 13, wherein the arc of contact (49) extends centrally along about one-half the axial length of the roll (10) and air is blown against the outer surface of the roll (10) at opposed axial ends' of the roll (10).

15. A roll of film wound on a core (12), comprising:
a core (12); and
film of polymeric material wound on said core (12), said film having a tail end portion(16) on the outer surface of said roll (10), said tail end portion (16) terminating at a tail edge (18), said tail edge (18) being rolled back on said tail end portion (16) to form a rolled tab (20) containing said tail edge (18);
whereby, said rolled tab (20) facilitates identifying and grasping said tail edge (18) to initiate unwinding of the film from the roll (10),
**characterized in that**
the film of polymeric material exhibits high cling characteristics to form the rolled tab (20) without applying a coating material or a solvent to the tail end portion (16) of the film.

16. The roll (10) of the film of Claim 15, wherein said roll (10) is contained within a carton for dispensing said film.

17. The roll (10) of film of Claim 16, wherein said rolled tab (20) is at least one full turn.

18. The roll (10) of film of Claim 15, wherein said film is a vinylidene chloride copolymer.

## Patentansprüche

1. Vorrichtung zur Verwendung auf einem Förderband zum Behandeln des Endstückes (16) einer Rolle (10) einer auf einen Kern (12) aufgewickelten Folie, deren Endteil (16) mit einer Endkante (18) endet,
**dadurch gekennzeichnet**,
daß die Vorrichtung enthält: einen Kasten (32), der mit dem Förderband zur Bewegung darauf verbunden ist, mit einem Boden (34) und einer davon abgehenden Wand (38), wobei der Boden (34) eine die Rolle tragende Zugoberfläche (35') aufweist und die Wand eine im wesentlichen reibungsfreie Oberfläche aufweist, von der die Rolle (10) in Richtung auf das Förderband gedrückt wird; und Antriebseinrichtungen (42), die sich in fester Stellung im wesentlichen parallel zum Förderband erstrecken, und mit einer elastischen Zugoberfläche (48), die in abrollendem Kontakt auf die Rolle (10) drückt, um die Rolle (10) zu drehen und die Oberfläche der Rolle (10) an der Zugoberfläche (35') des Bodens (34) in die gleiche Richtung zu reiben, in die sich das Endteil (16) ursprünglich auf der Oberfläche der Rolle erstreckt, so daß die Zugoberfläche (35') des Bodens (34) das sich ursprünglich um die Umfangsoberfläche der Rolle (10) erstreckende und an der Oberfläche haftende Endteil (16) von der Oberfläche der Rolle (10) ablöst und die Endkante (18) durch fortlaufende Drehungen der Rolle (10) rückwärts auf das Endteil (16) aufgerollt und ein die Endkante (18) enthaltender aufgerollter Streifen ausgebildet wird.

2. Vorrichtung nach Anspruch 1,
**dadurch gekennzeichnet**,
daß die Antriebseinrichtung einen Antriebsstab (42) mit einer langgestreckten Oberfläche, die mit einem elastischen Überzug (46) bedeckt ist, und ein elastisches Band aufweist, das den Überzug abdeckt und dazwischen zusammendrückbar ist, so daß das Band während der Drehung einen bogenförmigen, abrollenden Kontakt (49) ausreichender Länge mit der Rolle (10) ausbildet, um eine Zugwirkung zwischen den Oberflächen aufrechtzuerhalten, während die Zugoberfläche (35') des Bodens die Oberfläche der Rolle (10) reibt.

3. Vorrichtung nach Anpruch 2,
**dadurch gekennzeichnet**,
daß sich der bogenförmige, abrollende Kontakt (49) während der Drehung der Rolle in der Mitte über etwa die Hälfte der axialen Länge der Rolle (10) erstreckt.

4. Vorrichtung nach Anspruch 1, 2 oder 3,
**dadurch gekennzeichnet**,
daß die Zugoberfläche (35') des Bodens mindestens zwei im wesentlichen reibungsfreie Auflageflächen (36), auf denen die Rolle (10) abrollt, und eine sich dazwischen und entlang der Längsachse der Rolle (10) erstreckende Reibauflage (35) aufweist, wobei die Reibauflagefläche (35) die Oberfläche der beiden reibungsfreien Auflageflächen (36) überragt, um die axiale Oberfläche der Rolle (10) zu reiben.

5. Vorrichtung nach Anspruch 1,
**dadurch gekennzeichnet**,
daß sie feststehende Einrichtungen aufweist, die sich im wesentlichen parallel zum Förderband erstrecken, um Luft tangential auf die Umfangsoberfläche der Rolle (10) gegen das Endstück (16) bei fortlaufender Drehung zu blasen, um das Ablösen und Aufrollen des Endstückes (16) der Kunststoffolie zu unterstützen.

6. Vorrichtung nach Anspruch 5,
**dadurch gekennzeichnet**,
daß die Blaseinrichtung ein an den einander gegenüberliegenden Enden geschlossenes Rohr aufweist mit einem Einlaß (52) für Preßluft und einer Vielzahl von Auslaßöffnungen (54), die sich axial ausgerichtet entlang der Rohrwand erstrecken, um Luftströme auf die Umfangsoberfläche der Rolle (10) zu richten, während die Rolle über die elastische Zugoberfläche (35') abrollt.

7. Vorrichtung nach Anspruch 6,
**dadurch gekennzeichnet**,
daß sich die Antriebseinrichtung in der Mitte über etwa die halbe Oberfläche der Rolle (10) in deren axialer Richtung erstreckt und die Luftblaseinrichtung an den einander gegebenüberliegenden axialen Enden der Rolle (10) angeordnet ist.

8. Verfahren zum Ausbilden eines aufgerollten Streifens (20) am Endteil (16) einer auf einen Kern (12) aufgewikkelten Rolle (10) einer Folie, wobei das Endteil (16) sich ursprünglich um die Umfangsoberfläche der Rolle erstreckt, an der das Endteil (16) haftet, und mit einer Endkante (18) endet, durch Ablösen des Endteils (16) von der Oberfläche der Rolle (10) und Ausbilden eines die Endkante (18) enthaltenden aufgerollten Steifens (20),
**gekennzeichnet durch**
Vorwärtstreiben der Rolle (10) über eine elastische Zugoberfläche (35'), um die Rolle (10) in die gleiche Richtung zu drehen, in der sich das Endteil (16) ursprünglich über die Oberfläche der Rolle (10) erstreckt, Pressen der Rolle (10) zwischen der elastischen Zugoberfläche (35') und einer gegenüberliegenden federnden Kontaktoberfläche (48) mit einer Kraft von ausreichender Stärke, um die elastische Kontaktoberfläche (48) zusammenzudrücken, um einen bogenförmigen, abrollenden Kontakt (49) ausreichender Länge mit der Rolle (10) herzustellen, so daß Zugkraft zwischen ihnen aufrechterhalten wird, und Reiben der sich drehenden Oberfläche der Rolle (10) an der Kontaktoberfläche (48) unter Aufrechterhaltung der Zugkraft zwischen der Rolle (10) und der elastischen Zugoberfläche (35'), um das Endteil (16) von der Oberfläche der Rolle (10) abzulösen und die Endkante (18) durch fortlaufende Drehung der Rolle (10) rückwärts auf das Endteil (16) aufzurollen, um den Streifen (20) auszubilden.

9. Verfahren nach Anspruch 8,
**dadurch gekennzeichnet**,
daß die Rolle (10) durch radial nach innen wirkendes Andrücken der sich drehenden Oberfläche der Rolle (10) an eine im wesentlichen reibungsfreie Oberfläche, die sich parallel zur elastischen Zugoberfläche erstreckt, vorwärtsgetrieben wird.

10. Verfahren nach Anspruch 8,
**dadurch gekennzeichnet**,
daß die sich drehende Oberfläche an zwei axialen Stellen auf der axialen Länge der Rolle (10) angedrückt und an der verbleibenden Stelle der axialen Länge gerieben wird.

11. Verfahren nach Anspruch 8,
**dadurch gekennzeichnet**,
daß die sich drehende Oberfläche der Rolle (10) an der gesamten axialen Länge der Rolle (10) gerieben wird.

12. Verfahren nach Anspruch 11,
**dadurch gekennzeichnet**,
daß der bogenförmige Kontakt (49) in der Mitte über etwa die Hälfte der axialen Länge der Rolle (10) ausgebildet wird.

13. Verfahren nach Anspruch 8,
**dadurch gekennzeichnet,**
daß es den Schritt des tangentialen Blasens von Luft auf die sich drehende Umfangsoberfläche der Rolle (10) und gegen das Endstück der Folie während fortlaufender Drehungen der Rolle (10) einschließt, um das Ablösen und Aufrollen des Endteils der Folie zu unterstützen.

14. Verfahren nach Anspruch 13,
**dadurch gekennzeichnet**,
daß der bogenförmige Kontakt (49) in der Mitte über etwa die Hälfte der axialen Länge der Rolle (10) ausgebildet wird und Luft gegen die Außenoberfläche der Rolle (10) an einander gegenüberliegenden axialen Enden der Rolle (10) geblasen wird.

15. Rolle einer auf einen Kern (12) aufgewickelten Folie mit einem Kern (12) und einer Folie aus Polymermaterial, die auf den Kern (12) aufgewickelt ist, wobei die Folie auf der Außenoberfläche der Rolle (10) ein Endteil (16) aufweist und das Endteil (16) mit einer Endkante (18) endet, die Endkante (18) rückwärts auf das Endteil (16) aufgerollt ist, um einen die Endkante (18) enthaltenden aufgerollten Streifen (20) auszubilden, wobei der aufgerollte Streifen (20) das Identifizieren und Erfassen der Endkante (18) erleichtert, um das Abrollen der Folie von der Rolle (10) zu beginnen,
**dadurch gekennzeichnet**,
daß die Folie aus Polymermaterial hohes Haftungsvermögen aufweist, so daß ein aufgerollter Streifen (20) ohne Aufbringen eines Beschichtungsmaterials oder Lösemittels auf das Endteil (16) der Folie ausgebildet wird.

16. Rolle (10) der Folie nach Anspruch 15,
**dadurch gekennzeichnet**,
daß die Rolle (10) in einem Karton zur Entnahme der Folie enthalten ist.

17. Rolle (10) der Folie nach Anspruch 16,
**dadurch gekennzeichnet**,
daß der aufgerollte Streifen (20) mindestens eine volle Umdrehung ist.

18. Rolle (10) der Folie nach Anspruch 15,
**dadurch gekennzeichnet**,
daß die Folie aus einem Vinylidenchloridcopolymer ist.

## Revendications

1. Dispositif destiné à être utilisé sur une ligne de transport pour le traitement de la partie d'extrémité arrière (16) d'un rouleau (10) de film enroulé sur un mandrin (12), la partie d'extrémité arrière (16) se terminant à un bord arrière (18), caractérisé en ce que ledit dispositif comprend :
un bac (32) connecté à la ligne de transport, destiné à se déplacer sur celle-ci et présentant un fond (34) et une paroi (38) s'étendant à partir de ce dernier, ledit fond (34) présentant une surface de traction (35') supportant le rouleau et ladite paroi présentant une surface sensiblement sans friction poussant le rouleau (10) vers la ligne de transport ; et
un moyen d'entraînement (42) s'étendant, en position fixe, sensiblement parallèlement à la ligne de transport et présentant une surface de traction résiliente (48) poussée en contact de rotation avec le rouleau (10) pour faire tourner le rouleau (10) afin de faire frotter la surface du rouleau (10) contre ladite surface de traction (35') dudit fond (34) dans la même direction que celle dans laquelle s'étend initialement la partie d'extrémité arrière (16) sur la surface du rouleau (10);
ce par quoi ladite surface de traction (35') dudit fond (34) sépare la partie d'extrémité arrière (16) s'étendant initialement de manière circonférentielle autour de la surface du rouleau (10) à laquelle adhère la partie d'extrémité arrière (16) à partir de la surface du rouleau (10) et faisant tourner en arrière le bord arrière (18) sur la partie d'extrémité arrière (16) lors de rotations successives du rouleau (10), pour former une patte roulée contenant le bord arrière (18).

2. Dispositif suivant la revendication 1, dans lequel ledit moyen d'entraînement comprend une barre d'entraînement (42) présentant une surface allongée, un coussinet en matériau résilient (46) recouvrant ladite surface et une courroie résiliente recouvrant ledit coussinet et pouvant être comprimée entre eux de manière que ladite courroie forme un arc de contact de rotation (49) de longueur suffisante avec le rouleau (10) pour maintenir une traction entre eux tandis que la surface de traction (35') dudit fond frotte contre la surface du rouleau (10).

3. Dispositif suivant la revendication 2, dans lequel ledit arc de contact de rotation (49) s'étend de manière centrale sur environ la moitié de la longueur axiale du rouleau (10).

4. Dispositif suivant la revendication 1, 2 ou 3, dans lequel ladite surface de traction (35') dudit fond comprend au moins deux coussinets sensiblement sans friction (36) sur lesquels tourne le rouleau (10) et un coussinet à friction (35) s'étendant entre eux et sur la longueur axiale du rouleau (10), ledit coussinet à friction (35) s'étendant au-dessus de la surface desdits deux coussinets sans friction (36), pour frotter contre la surface axiale du rouleau (10).

5. Dispositif suivant la revendication 1, comportant un moyen s'étendant, en position fixe, sensiblement parallèlement à la ligne de transport, destiné à souffler de l'air tangentiellement le long de la surface circonférentielle du rouleau (10) et contre la partie d'extrémité arrière (16) lors de rotations successives, afin d'aider à séparer et à rouler la partie d'extrémité arrière (16) du film plastique.

6. Dispositif suivant la revendication 5, dans lequel ledit moyen de soufflage comprend un tube fermé aux extrémités opposées, ledit tube présentant une entrée (52) destinée à recevoir de l'air comprimé, et une pluralité de sorties (54), alignées axialement le long de la paroi dudit tube, destinées à diriger des courants d'air sur la surface circonférentielle du rouleau (10), tout en faisant tourner le rouleau le long de ladite surface de traction résiliente (35').

7. Dispositif suivant la revendication 6, dans lequel ledit moyen d'entraînement s'étend de manière centrale sur environ la moitié de la surface axiale du rouleau (10) et dans lequel ledit moyen de soufflage d'air est positionné aux extrémités axiales opposées du rouleau (10).

8. Procédé de formation d'une patte roulée (20) dans la partie d'extrémité arrière (16) d'un rouleau (10) de film enroulé sur un mandrin (12), la partie d'extrémité arrière (16) s'étendant initialement de manière circonférentielle autour de la surface du rouleau (10) à laquelle adhère la partie d'extrémité arrière (16) et se terminant à un bord arrière (18), en séparant la partie d'extrémité arrière (16) de la surface du rouleau (10) et en formant une patte roulée (20) contenant le bord arrière (18), caractérisé par les étapes consistant à
entraîner le rouleau (10) sur une surface de traction résiliente (35') pour faire tourner le rouleau (10) dans la même direction que celle dans laquelle s'étend initialement la partie d'extrémité arrière (16) sur la surface du rouleau (10);
presser le rouleau (10) entre la surface de traction résiliente (35') et une surface de contact résiliente diamétralement opposée (48), avec une pression d'amplitude suffisante pour comprimer la surface de contact résiliente (48) pour former un arc de contact (49) de longueur suffisante avec le rouleau (10), afin de maintenir une traction entre eux ; et
frotter la surface tournante du rouleau (10) contre la surface de contact (48), tout en maintenant la traction entre le rouleau (10) et la surface de traction résiliente (35') pour séparer la partie d'extrémité arrière (16) de la surface du rouleau (10) et rouler en arrière le bord arrière (18) sur la partie d'extrémité arrière (16) lors de rotations successives du rouleau (10), pour former ladite patte (20).

9. Procédé suivant la revendication 8, dans lequel le rouleau (10) est entraîné en poussant la surface tournante du rouleau (10) radialement vers l'intérieur avec une surface sensiblement sans friction et parallèle à la surface de traction résiliente.

10. Procédé suivant la revendication 8, dans lequel la surface tournante est pressée en deux positions axiales sur la longueur axiale du rouleau (10) et frottée le long de la partie restante de la longueur axiale.

11. Procédé suivant la revendication 8, dans lequel la surface tournante du rouleau (10) est frottée sur toute la longueur axiale du rouleau (10).

12. Procédé suivant la revendication 11, dans lequel l'arc de contact (49) s'étend de manière centrale sur environ la moitié de la longueur axiale du rouleau (10).

13. Procédé suivant la revendication 8, comprenant l'étape consistant à souffler de l'air de manière tangentielle et circonférentielle sur la surface tournante du rouleau (10) et contre la partie d'extrémité arrière du film lors de rotations successives, afin d'aider à séparer et rouler la partie d'extrémité arrière du film.

14. Procédé suivant la revendication 13, dans lequel l'arc de contact (49) s'étend de manière centrale sur environ la moitié de la longueur axiale du rouleau (10) et de l'air est soufflé contre la surface extérieure du rouleau (10) aux extrémités axiales opposées du rouleau (10).

15. Rouleau de film enroulé sur un mandrin (12), comprenant :
un mandrin (12); et
un film de matériau polymère enroulé sur ledit mandrin (12), ledit film présentant une partie d'extrémité arrière (16) sur la surface extérieure dudit rouleau (10), ladite partie d'extrémité arrière (16) se terminant à un bord arrière (18), ledit bord arrière (18) étant roulé en arrière sur ladite partie d'extrémité arrière (16) pour former une patte roulée (20) contenant ledit bord arrière (18);
ce par quoi, ladite patte roulée (20) facilite l'identification et la saisie dudit bord arrière (18) pour commencer le déroulement du film du rouleau (10),
caractérisé en ce que le film de matériau polymère présente des caractéristiques d'adhérence élevée, afin de former la patte roulée (20) sans application d'un matériau de revêtement ou d'un solvant sur la partie d'extrémité arrière (16) du film.

16. Rouleau (10) de film suivant la revendication 15, dans lequel ledit rouleau (10) est contenu dans un carton destiné à la distribution dudit film.

17. Rouleau (10) de film suivant la revendication 16, dans lequel ladite patte roulée (20) est d'au moins un tour complet.

18. Rouleau (10) de film suivant la revendication 15, dans lequel ledit film est un copolymère à base de chlorure de vinylidène.
